# EUROPEAN PATENT APPLICATION

(11) **EP 1 830 588 A1**
(43) Date of publication of application: **05.09.2007**
(21) Application number: 04807560.0
(22) Date of filing: 22.12.2004
(51) Int. Cl.: H04Q 7/20

(54) **METHOD FOR CONTROLLING PORTABLE COMMUNICATION EQUIPMENT**

(71) Applicant: Fujitsu Ltd., Kawasaki-shi, Kanagawa 211-8588 (JP)
(72) Inventor: SUGIYAMA, Katsumasa, Fujitsu Limited, Kawasaki-shi, Kanagawa 2118588 (JP); KOIZUMI, Yoshiko, Fujitsu Limited, Kawasaki-shi, Kanagawa2 118588 (JP)
(74) Representative: Sunderland, James Harry
(86) International application number: PCT/JP2004/019203
(87) International publication number: WO 2006/067840

(57) **Abstract**

Mobile communication device recognizes a control area without using a communication line and performs control corresponding to the control area. In the case of communication with other device through the communication line, control information of the control area where communication is to be controlled is read, control contents of the control information are judged and a communication status is controlled by following the control contents.

## Description

### BACKGROUND OF THE INVENTION

The present invention relates to a technology of controlling a using status of a mobile communication device such as a mobile phone. The present invention relates to, specifically, a technology of automatically inhibiting communications within a hospital, at a concert hall and in the vicinity of a priority seat, and setting/cancelling a manner mode in a train.

Over the recent years, a multiplicity of person has come to utilize the mobile phones with a widespread use of the mobile phones, along with this spread, adverse influence of the mobile phones has got unignorable. It is therefore desired that the individual users utilize the mobile phones in a way that keeps the manner. For example, a recommendation in the train is to set a mode (manner mode) for muting a tone even when receiving a call or an e-mail so as not to annoy other passengers due to speaking and an incoming tone. Further, radio waves emitted from the mobile phone might cause a malfunction of a cardiac pacemaker and an embedded type cardiac defibrillator, and it is recommended to switch off a power source of the mobile phone or to set a mode (self mode) with none of the radio waves emitted in the vicinity of a priority seat.

Even if the great majority of users keep the manner and perform the operation of setting these modes or switching off the power source, some user might forget to do such operations, and these operations are not necessarily completely carried out.

It is therefore considered to recognize a specified place and to automatically restrict functions of the mobile phone. The execution of the control corresponding to an area that is as extremely small as the priority seat, involves a means for recognizing that the terminal exists in this small area. Generally, the mobile phone recognizes its location from a cell where the mobile phone 2 exists, however, the cell is defined as an area over which the same radio waves reach and therefore, it is general, extends over a range of several hundreds of meters through several kilometers. The accuracy is on the order of several meters even by utilizing GPS (Global Positioning System), and there might be a case of being unable to use such a means in a building and an underground shopping mall.

On the other hand, as utilization of an RF tag has recently advanced, it becomes realistic to configure a system by introducing the RF tags. The use of the RF tag enables the small area to be specified by much weaker radio waves than the radio waves for the communications of the mobile phones.
For example, a technology disclosed in Patent document 1 or 2 given below is given as the prior art of restricting the communications of the mobile phones in the case of thus recognizing the specified area.

[Patent document 1]
   Japanese Patent Application Laid-Open Publication No.2003-60556
[Patent document 2]
   Japanese Patent Application Laid-Open Publication No.2002-271850

### SUMMARY OF THE INVENTION

The technology described above involves providing a reader on the side of the area such as the hospital and the concert hall, reading identifying information of the mobile phone entering this area, and transmitting control information by dialing each mobile phone on the basis of the identifying information.

Thus, in a systemof installing a device for reading the identifying information and transmitting the control information on the area side, this is needed on an area-by-area basis, and a multiplicity of the devices must be installed in the hospital and the small-sized area such as the priority seat, in which case a problem is that the system configuration becomes excessively complicated. Hence, it was not an easy operation to add the area and to change the control content.

Further, in the case of the area such as the concert hall utilized by many people, this device must execute all of processes, and hence a tremendous capacity must be prepared corresponding to an upper limit of the users, resulting in a decline of efficiency.

Moreover, this system transmits the control information to each of the mobile phones via a telephone line separately from reading the identifying information, and consequently congestion of the telephone lines is easy to occur. Further, a cost for the communications tends to rise because of using the telephone lines.
Then, the use of the telephone line requires setting the identifying information corresponding to a telephone number in an invariably-readable status from others because of employing the telephone line, and a problem is that this status is undesirable in terms of security.

Such being the case, the present invention provides a technology enabling a mobile communication device to perform control corresponding to a control area by recognizing the control area without employing a communication line.

Amobile communication device according to the present invention comprises:
a communication unit performing communications with another device via a communication line;
a reading unit reading control information of a control area in which the communication is controlled;
a determining unit determining a control content of the control information; and
a control unit controlling a communication status of the communication unit according to the control content.

The control information may contain information that specifies the control and information that specifies the control area.
The determining unit may determine that the control content of the control information remains valid during a period for which the reading unit continuously receives the control information of the control area, and may determine that the control content of the control information is invalid when the reading unit does not receive the control information.

The control content may embrace inhibition of the communication performed by the communication unit, cancellation of the inhibition of the communication, inhibition of an incoming tone of the communication unit, and cancellation of the inhibition of the incoming tone.

The determining unit may, when the reading unit reads the control information, compare the control content related to the control information with a control content of the control executed by the control unit, and may thereby determine whether the control is required to change or not, and
the control unit may, when determining that the control is required to change, change the control based on the control content related to the readout control information.

When conducting the control based on the control content of a readout control signal, a user may be given notification by displaying a purport of conducting the control, vibrations of a vibrator or outputting a tone.
If a user inputs an instruction of the communication during a period for which the control unit restricts the communication of the communication unit and if the user again inputs the instruction of the communication after notifying the user of a purport of restricting the communication, the communication unit may be made to perform the communication.
When the reading unit reads plural pieces of control information, the determining unit may determine priority levels of these plural pieces of control information, and the control unit may conduct the control according to the control information exhibiting the higher priority level.

If the control content specifies the inhibition of the communication, the control unit may stop the communication of the communication unit in a status where the reading unit is enabled to read the control information.
The reading unit may be an RF reader that reads the control information recorded on an RF tag.

Further, a control system of a mobile communication device, includes a reading target object attached in a control area where the communication is controlled, and the mobile communication device conducting, when moving to the control area, the control corresponding to the control area,
the reading target object being stored with control information corresponding to each control area,
the mobile communication device comprising:
a communication unit performing communications with another device via a communication line;
a reading unit reading control information of a control area in which the communication is controlled;
a determining unit determining a control content of the control information; and
a control unit controlling a communication status of the communication unit according to the control content.

Further, a control method according to the present invention is a method by which a mobile communication device executes:
a step of performing communications with another device via a communication line;
a step of reading control information of a control area in which the communication is controlled;
a step of determining a control content of the control information; and
a step of controlling a communication status according to the control content.

The control information may contain information that specifies the control and information that specifies the control area.
The step of determining the control content may include determining that the control content of the control information remains valid during a period for which the control information of the control area is continuously received, and determining that the control content of the control information is invalid when the control information is not received.
The control content may embrace inhibition of the communication performed by the communication unit, cancellation of the inhibition of the communication, inhibition of an incoming tone of the communication unit, and cancellation of the inhibition of the incoming tone

The step of determining the control content may include comparing, when reading the control information, the control content related to the control information with a control content of the control executed by the control unit, and thereby determining whether the control is required to change or not, and
the step of controlling the communication status may include changing, when determining that the control is required to change, the control based on the control content related to the readout control information.

When conducting the control based on the control content of a readout control signal, a user may be given notification by displaying a purport of conducting the control, vibrations of a vibrator or a tone from a speaker.
The step of controlling the communication status may include, if a user inputs an instruction of the communication during a period for which to restrict the communication of the communication unit, notifying the user of a purport of restricting the communication, and thereafter, if the user again inputs the instruction of the communication, performing the communication.

When reading plural pieces of control information, the step of the control content may include determining priority levels of these plural pieces of control information, and conducting the control according to the control information exhibiting the higher priority level.
If the control content specifies the inhibition of the communication, the communication may be stopped in a status where the control information can be read.
Further, the present invention may also be a control program (firm ware) for making the mobile communication device (computer) execute the control method.
Still further, the present invention may also be a recording medium recorded with the control program that can be read by the mobile communication device. The program on the recording medium is read and executed by the mobile communication device, whereby the functions thereof can be provided.
Herein, the recording medium readable by the mobile communication device (computer) connotes a recording medium capable of storing information such as data and programs electrically, magnetically, optically, mechanically or by chemical action, which can be read from the mobile communication device. Among these recording mediums, for example, a flexible disc, a magneto-optic disc, a CD-ROM, a CD-R/W, a DVD, a DAT, an 8 mm tape, a memory card, etc are given as those demountable from the computer.
Further, a hard disc, a ROM (Read-Only Memory), a flash memory, etc. are given as the recording mediums fixed within the computer.

According to the present invention, it is feasible to provide a technology enabling the mobile communication device to recognize the control area without employing the communication line and to perform the control corresponding to the control area.

### BRIEF DESCRIPTION OF THE DRAWINGS

FIG. 1 is a diagram of a basic configuration of a control system according to the present invention.
FIG. 2 is a block diagram of a mobile phone defined as a mobile communication device according to the present invention.
FIG. 3 is a diagram showing an example in which the vicinity of a priority seat is set as a control area.
FIG. 4 is a flowchart of how the control is conducted by reading an RF tag in the vicinity of the priority seat.
FIG. 5 is a flowchart of how the communication is controlled only when the necessity arises.
FIG. 6 is a diagram showing an example in which a concert hall is set as a control area.
FIG. 7 is a flowchart in a case where the concert hall is set as the control area.
FIG. 8 is a diagram showing a data format of control information.

### DETAILED DESCRIPTION OF THE PREFERRED EMBODIMENT

Abest mode for carrying out the present invention will hereinafter be described with reference to the drawings. A configuration in the following embodiment is an exemplification, and the present invention is not limited to the configuration in the embodiment.

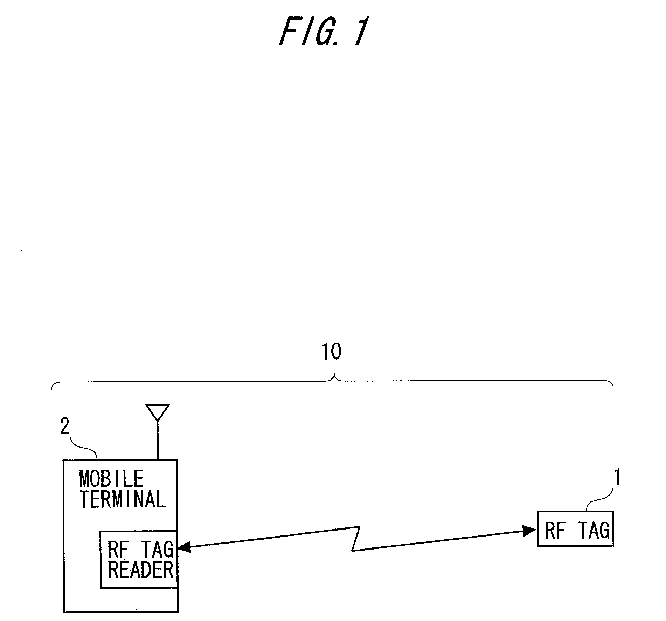

FIG. 1 is a diagram of a basic configuration of a control system 10 of a mobile device according to the present invention.

The present system 10 is configured by an RF (Radio Frequency) tag (reading target object) 1 installed in a control area in which to control communications, and a mobile phone (a mobile communication device) 2 that exercises control corresponding to the control area when moving to the control area.

The present system 10 is such that the RF tags 1 are attached to want-to-restrict-the-communication places (which will hereinafter be referred to as control areas) such as a hospital, priority seats (the seats for the elderly or the handicapped), a concert hall and a movie theater, and the communications are, when the mobile phone 2 reads the RF tag 1, automatically restricted, whereby the restriction of the communications in the control area can be surely conducted.

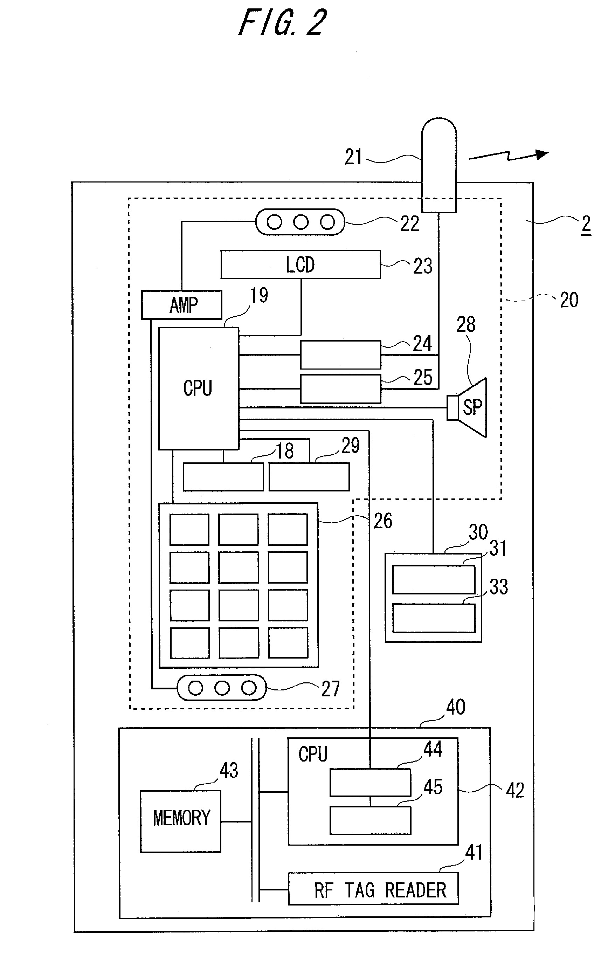

FIG. 2 is a block diagram of the mobile phone 2 defined as a mobile communication device according to the present invention. The mobile phone 2 includes, as components of a basicmodule (corresponding to a communication module) 20 mainly for performing telephonic communications, a memory 18, a CPU 19, an antenna 21, a receiving speaker 22, a display unit (LCD) 23, a transmitting unit 24, a receiving unit 25, an operation unit 26, a microphone 27, a speaker 28, a vibrator 29, etc.

When a user reads a telephone number of a telephonic communication partner from the memory 18 and gives a call originating instruction by operating the operation unit 26, the CPU 19 establishes a connection to a telephone of the telephonic communication partner via a telephone network of a base station etc by controlling the respective components, thereby enabling the telephonic communications to be performed. At this time, for example, the transmitting unit 24 codes a user's voice inputted from the microphone 27 into transmission signals, and transmits the transmission signals as carried on radio waves to the base station from the antenna 21. Further, the receiving unit 25 receives the transmission signals of the telephone of the telephonic communication partner from the base station and decodes the signals into voice signals, and the voice signals are output from the receiving speaker 22.

Thus, the mobile phone 2 performs the communications with the base station located away from several tens of kilometers (Km) during the telephonic communication, and therefore transmits the radio waves on the order of 1W. Further, the mobile phone 2 transmits location registration information etc at an interval of a predetermined period and if the communicating target base station changes even during a standby status. Moreover, in the mobile phone 2, the receiving unit 25, even when simply receiving the signals from the telephonic communication partner, temporarily converts the reception signals into intermediate frequency signals, and on this occasion these intermediate frequency signals are emitted, with the result that this might cause a problem.

Further, the mobile phone 2 includes, as components of an extended module 30, a mail management unit 31 and a Web Browser 33. When the mobile phone 2 transmits and receives an electronic mail, the radio waves are transmitted and received by the transmitting unit 24 and the receiving unit 25 in order to transmit the electronic mail generated by the mail management unit 31 and receive the electronic mail from another device.

Further, the mobile phone 2 includes, as components of a communication control module 40, a reading unit 41, a CPU 42 and a memory 43.
The reading unit (RF tag reader) 41 reads control information embedded in the control area. Note that a reading method may be either an active method or a passive method.

The CPU 42 reads a communication control program stored in the memory 43, and executes the processing according to the communication control program. The CPU 42 gets, through this process, the RF tag reader 41 to periodically search for the RF tag 1 and to read the RF tag 1 existing in a readable range. Moreover, the CPU 42, through this process, realizes functions of a determining unit 44 and of a communication control unit 45.

The determining unit 44, as its function, determines whether or not the information read by the RF tag reader 41 is a content of the control for restricting the communication.
Further, the communication control unit 45, as its function, controls a communication status of the communication module according to the content of the control.

It should be noted that the present embodiment takes the configuration of actualizing the processes of the components 41, 43, 44, 45, etc by the general-purpose CPU 42 based on the software (the communication control program), however, the present invention is not limited to this configuration and may adopt a configuration of realizing the processes of the those components 41, 43, 44, 45, etc by use of dedicated pieces of hardware (electronic circuits).

The mobile phone 2 has a plurality of modes, and the CPU 19 controls the respective units in accordance with these modes.
For instance, in a normal mode, when receiving a phone call and the e-mail, the CPU 19 gets the transmitting unit 24 and the receiving unit 25 to start the communications, and outputs a call or e-mail receiving tone from the speaker 28, thus notifying the user of the call or the e-mail received. In the case of the call received, the user presses a speech button of the operation unit 26, thus starting the telephonic communication. Further, in the case of receiving the e-mail, the mail management unit 31 stores the e-mail received by the transmitting unit 24 and the receiving unit 25 in the memory 18, and displays a purport of receiving the e-mail on the display unit 23.

Moreover, if set in a manner mode, the CPU 19, when receiving the call or the e-mail, gets the transmitting unit 24 and the receiving unit 25 to start the communications, and inhibits an output of the receiving tone while notifying the user of the call or the e-mail received through vibrations of the vibrator 29. Thus, if set in the manner mode, it does not happen that sudden emission of the tone might annoy others in a concert hall or a movie theater. Incidentally, the telephonic communication can be performed in the same way as in the normal mode, and the user can speak while moving to a speech-enabled place and can call back later on by referring to an incoming call log.

Further, if set in a self mode (non-transmission mode) , the CPU 19 stops the units (switches OFF a power source) , which output a predetermined or higher level of radio waves, such as the transmitting unit 24 and the receiving unit 25. Further, if connectable to an option of outputting the radio waves of a wireless LAN and Bluetooth (registered trade mark) , such a scheme may be taken that the CPU 19 can stop the option. Thus, when in the self mode, the predetermined or higher level of radio waves are not output, thereby enabling a malfunction of a medical instrument and EMI (Electro-Magnetic Interference) within an airplane to be prevented. Note that the mail management unit 31 and a communication control module 40 other than those described above are in an operable status (with the power source switched ON) in the same way as in the normal mode, and hence it is feasible to create the e-mail, sort an address book and search for the RF tag.

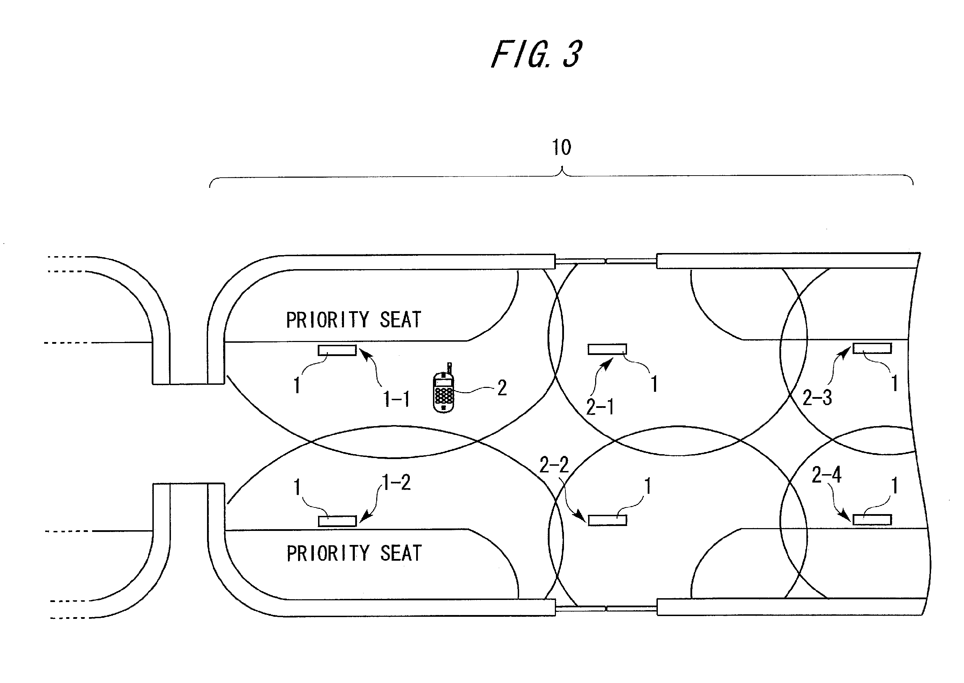

A method (a communication control method) of controlling the communications by executing the communication control program with the mobile phone 2 in the present embodiment described above, will be explained with reference to FIGS. 3 through 8.

### [Example of Control in Vicinity of Priority Seat]

FIG. 3 shows an example in which the vicinity of the priority seat is set as the control area. The RF tags 1 are previously attached to the seat, a handrail, etc to cover the control area in order to inhibit the communication of the mobile phone in the vicinity of the priority seat. The example in FIG. 3 is that the RF tags 1 each having a communication distance of 1 meter are attached to two portions 1-1 and 1-2.

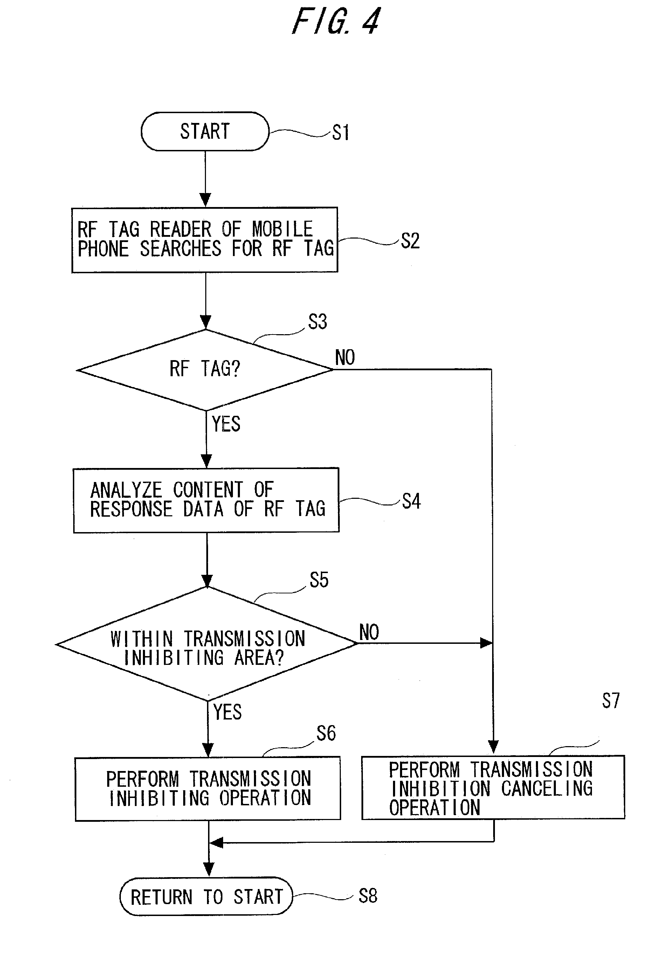

FIG. 4 is a flowchart of how the control is conducted by reading the RF tag 1 in the vicinity of the priority seat.
The mobile phone 2 starts the control as triggered by switching ON the power source or starting the operation by the user (step 1, which will hereinafter also be abbreviated to S1).

To begin with, the CPU 42 gets the RF tag reader 41 to search for the RF tag 1 (S2).
When detecting the RF tag 1 as a result of the search, the determining unit 44 analyzes a content of the control in the information received from the RF tag 1 (S3, S4). Herein, the determining unit 44 determines whether or not the control content specifies the transmission-inhibited status (S5), and, if the transmission is inhibited, the operation proceeds to step 6. Then, the communication control unit 45 notifies the CPU 19 of the basic module 20 that the self mode is set, thereby getting the CPU 19 to restrict the communications (S6).

Whereas if the control content does not specify the transmission-inhibited status in step 5 and if the RF tag 1 is not detected in step 3, the communication control unit 45 notifies the CPU 19 of the basic module 20 that the normal mode is set, and gets the CPU 19 to cancel the restriction of the communication (S7).
The CPU 42 repeats these processes (S2 - S7) at an interval of a predetermined period of time (S8).

With this operation, when the user carrying the mobile phone 2 moves to the vicinity of the priority seat, the mobile phone 2 recognizes the communication-inhibited area because of entering the communication range of the RF tag 1, and automatically sets the operation in the self mode. The mobile phone 2 determines that the control content remains effective during a period for which the mobile phone 2 is located in the control area and receives the data from the RF tag 1, then repeats the setting of the self mode, and therefore keeps the communication-restricted status. Then, when the user moves away from the vicinity of the priority seat, the mobile phone 2 moves off the communication range of the RF tag 1 and is disabled to receive the data from the RF tag 1, whereby the mobile phone 2 determines that the control content is invalid and sets the operation in the normal mode by cancelling the restriction of the communication.

Thus, the mobile phone 2 automatically controls the communication status, and hence it does not happen that the mobile phone 2 forgets to set the operation in the self mode in the vicinity of the priority seat and forgets to cancel the self mode when moving away from the priority seat.

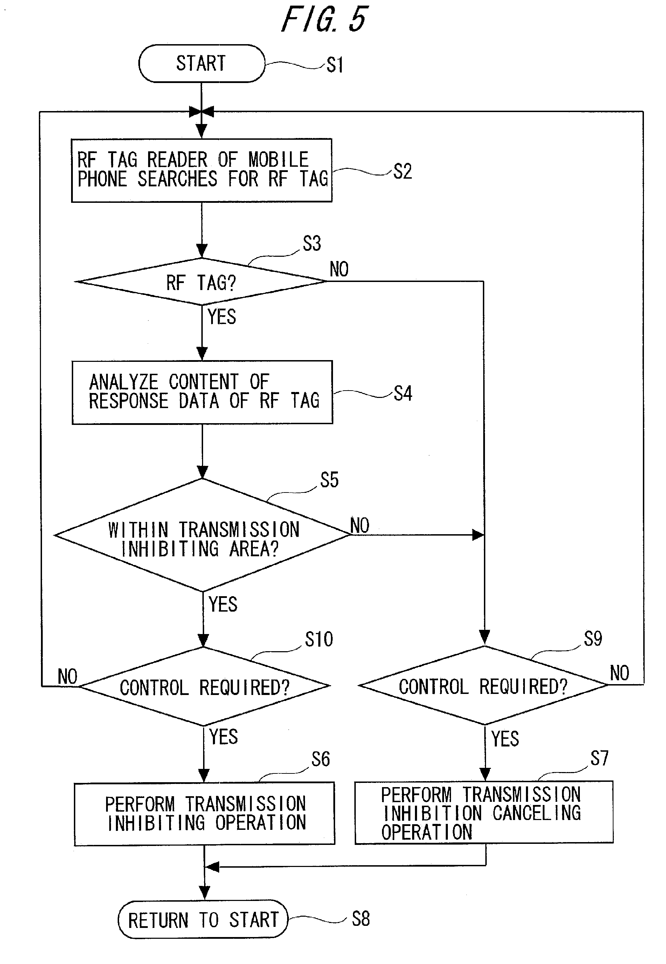

Further, the processes described above have exemplified the instance of controlling the communication on a search-by-search basis, however, without being limited to this exemplification, as shown in FIG. 5, in steps 8 and 9, the determining unit 44 compares the control content that has been read this time with the present control content, and the communication control unit 45 may change the control content to the content read this time only when the necessity arises. Specifically, in step 8, the determining unit 44 refers to the control content of the communication control unit 45, then returns the operation to step 2 because of having no necessity for the control if in the self mode (the transmission-inhibited status), i.e., if coincident with the control content that has been read this time, and changes the operation to the self mode in the communication control unit 45 when determining that the control is required whereas if not in the self mode. Further, when the determining unit 44 determines in step 9 by referring to the control content of the communication control unit 45 that the operation is not in the self mode, i.e., the cancellation is not needed, with the result that the operation is returned to step 2, and, when determining that the control is required whereas if in the self mode, changes the operation in the cancelling status (the normal mode).

Further, in the processes described above, the RF tag 1 for restricting the communication is configured only to inhibit the communication, however, such a scheme may also be available that the RF tags 1 having plural types of control contents are also provided in mixture. For instance, the RF tags 1 for inhibiting the incoming tone to be output (i.e., the RF tags each stored with a control content of inhibiting the incoming tone) are further attached to positions (portions) 2-1, 2-2, 2-3 and 2-4 other than the priority seats, the self mode is set when the mobile phone 2 detects the RF tag 1 for inhibiting the communication, and the manner mode is set when detecting the RF tag 1 for inhibiting the incoming tone. With this scheme, the self mode can be automatically set when located in the vicinity of the priority seat, the manner mode can be set when moving to an area other than the vicinity of the in-vehicle (in-train) priority seat, and these modes can be cancelled when getting off the vehicle.

Moreover, the processes described above have exemplified the instance in which the normal mode is set in the case of being disabled to read the RF tag 1 for inhibiting the communication, however, without being limited to this exemplification, the operation may also be set returning to the mode before restricting the communication. Tobe specific, when the communication control unit 45 in step 6 notifies the CPU 19 that the self mode is set, the present status (a pre-inhibiting status) is stored in the memory, and, on the occasion of performing the cancelling operation in step 7, the pre-inhibiting status is read from the memory and is thus set. For example, the mobile phone 2 set in the manner mode moves to the vicinity of the priority seat, and the self mode is set, in which case the previous manner mode is set when the mobile phone 2 moves away from the vicinity of the priority seat. Similarly, when the mobile phone 2 set in the normal mode moves away from the vicinity of the priority seat, the previous normal mode is set.

Further, when controlling the communication status such as inhibiting the communication and cancelling the inhibition of the communication, the user may be notified of controlling the communication by outputting the tone from the speaker 28, vibrating the vibrator 29 and displaying a message on the display unit 23. For example, when setting the self mode and the manner mode, the communication control unit 45 vibrates the vibrator 29 in a predetermined pattern and displays a name of the mode to be set on the display unit 23. Further, when cancelling the self mode and the manner mode, the communication control unit 45 outputs a predetermined tone from the speaker 28, and displays a purport that the self mode or the manner mode is cancelled. This contrivance enables the user to recognize the automatically-set mode.

Moreover, when conducting the control of restricting the communication, the user performs a call originating operation or a call receiving operation, in which case the communication control unit 45 may notify the user of the communication-restricted area by outputting the tone from the speaker 28, vibrating the vibrator 29 and the displaying the message on the display unit 23. With this contrivance, the user is made to have new recognition of being in the area where the self mode or the manner mode should be set and is prompted to keep the manner. Then, after notifying the user of the purport of being in the communication-inhibited area, if the user nevertheless performs the call originating or receiving operation, the telephonic communication is enabled in consideration of a possibility of an emergency call.

Further, another scheme may also be available, wherein priority levels are set about a plurality of control contents, the determining unit 44, when simultaneously reading the RF tags 1 having the different control contents, selects the control content exhibiting the highest priority level, and the communication control unit 45 controls the communication status based on the control content exhibiting the highest priority level. For instance, at a boundary of the control area in the vicinity of the priority seat, the data might be received from both of the RF tag 1 of which the control content is to inhibit the communication and the RF tag 1 of which the control content is to inhibit the incoming tone. At this time, if the priority level of inhibiting the communication is set higher than the priority level of inhibiting the incoming tone, the communication control unit 45 sets the self mode according to this setting of the priority levels.

The places attached with the RF tags (reading target objects) 1 may be, in addition to the train, a bus, an airplane, a passenger car, a meeting room, a library, a concert hall, etc. Further, a person may carry the RF tag without any limit on being attached to the specified place. For instance, the person employing a cardiac pacemaker, a cardiac defibrillator, etc carries the RF tag 1 of which the control content is to inhibit the communication, thereby inhibiting the communications of the peripheral mobile phones and enabling the person employing the cardiac pacemaker and the cardiac defibrillator to avoid being affected by the radio waves from the mobile phones 2.

### [Control Example at Concert Hall]

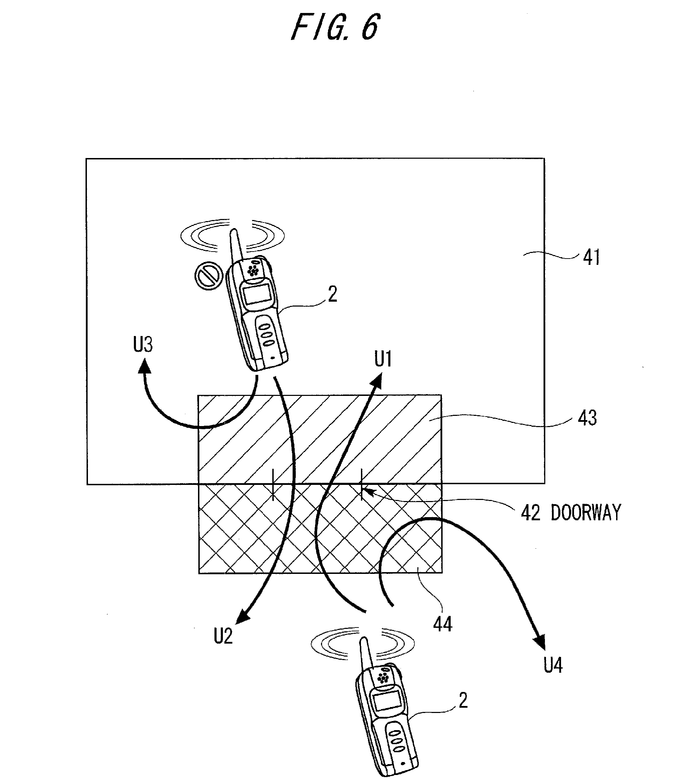

FIG. 6 shows an example in which the concert hall is set as the control area. In the example of the vicinity of the priority seat described above, the RF tags are provided so as to cover the control area throughout, however, the present example is such that a doorway of the concert hall is limited, and hence the communications within the control area are controlled by attaching the RF tags to the doorway.

In the example in FIG. 6, the RF tag 1, of which the control content is to restrict the communications, is attached to the inside vicinity of a doorway 42 of a concert hall 41, wherein a communication range (restriction notifying range) 43 of the RF tag is depicted by hatching of oblique lines. Further, the RF tag 1, of which the control content is to cancel the restriction of the communication, is attached to the outside vicinity of the doorway 42 of the concert hall 41, wherein a communication range (cancellation notifying range) 44 of the RF tag is depicted by cross-shaped hatching.

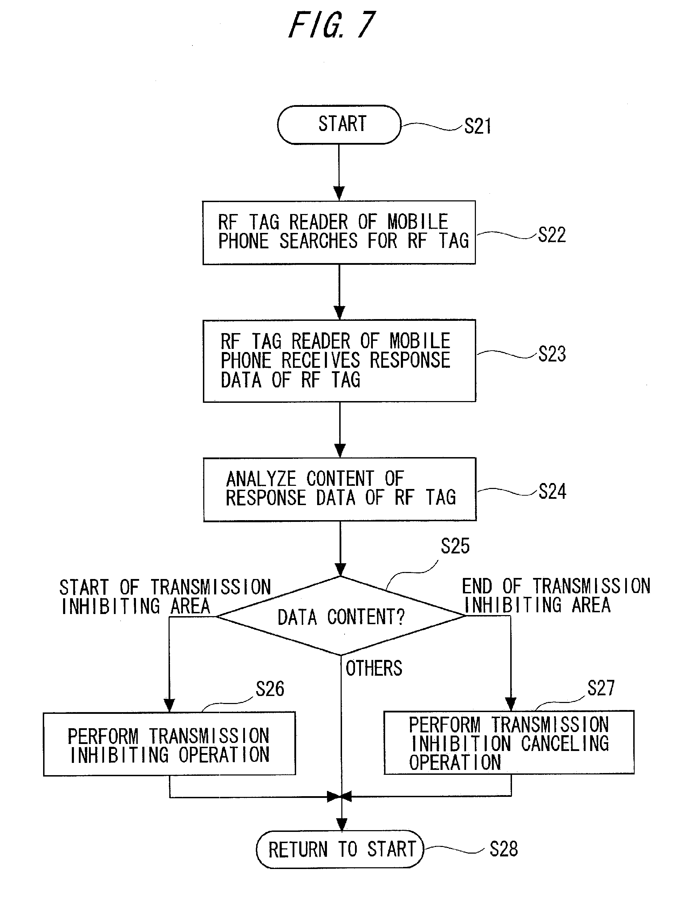

FIG. 7 is a flowchart on the occasion of the control by reading the RF tag 1 at the concert hall 41.
The start of the control of the mobile phone 2 is triggered by switching ON the power source or by the user's starting the operation (S21).
To begin with, the CPU 42 gets the RF tag reader 41 to search for the RF tag 1 (S22).

When receiving the data (control information) from the RF tag 1 as a result of the search, the determining unit 44 analyzes a control content in the data received from the RF tag 1 (S23, S24). Herein, the determining unit 44 compares the control content read this time with the present control content, and determines whether the control is needed or not (S25). Herein, it is determined that the control is needed if the present control content does not specify the restriction of the communication while the readout control content specifies the restriction of the communication, and the operation proceeds to step 26, wherein the communication control unit 45 performs the operation of restricting the communication (S26). For example, the manner mode is set. Further, if the present control content specifies the restriction of the communication while the readout control content specifies the restriction of the communication, it is determined that the control is not needed, and the operation loops back to the start (S28). Moreover, if the present control content specifies the restriction of the communication while the readout control content specifies the cancellation of the communication control, the operation proceeds to step 27, wherein the communication control unit 45 cancels the restriction of the communication (S27). For instance, the normal mode is set. Note that a pre-communication-restricted status may be stored on the occasion of conducting the operation of restricting the communication in step 26, the operating status may be returned to this pre-communication-restricted status on the occasion of cancelling the communication control. Further, if the present control content does not specify the restriction of the communication while the readout control content specifies the cancellation of the restriction of the communication, it is determined that the control is unnecessary, and the operation loops back to the start (S28). Further, if disabled to receive the data from the RF tag 1 in step 23, it is determined that the control is not required (S24, S25), and the operation loops back to the start (S28).
The CPU 42 repeats these processes (S22 - S27) at an interval of a predetermined period of time (S28).

With this operation, when the user carrying the mobile phone 2 enters the restriction notifying range 43 from the doorway as indicated by an arrow U1, the mobile phone 2 performs the operation of restricting the communication, e.g., sets the manner mode.
On the other hand, when the user goes outside from the exit of the concert hall 41 as indicated by an arrow U2 and is located in a cancellation notifying range 44, the mobile phone 2 conducts the operation of cancelling the communication control, e.g., sets the normal mode.

Further, when the user moves around within the concert hall as indicated by an arrow U3, the mobile phone 2 has already been in the communication-restricted status, and hence the control is not conducted even when detecting the RF tag 1. Similarly, when the user outside the concert hall passes through the cancellation notifying range 44 as indicated by an arrow U4, the mobile phone 2 does not undergo the restriction of the communication, and therefore the control is not performed even when detecting the RF tag 1.
Further, information for specifying the area may be added as a control content of the RF tag 1, and the control limited to this area may also be conducted. For example, the mobile phone 2 is notified of the information for specifying the control (the restriction of the communication and the cancellation thereof) in the restriction notifying range 43 and the information (an identifying number) for specifying the area, and is stored with, when performing the operation of restricting the communication, the information for specifying this area. Then, when the mobile phone 2 reads the control content showing the cancellation of the restriction of the communication and the identifying number in the cancellation notifying range 44, the communication restriction conducted in the area (the restriction notifying range 43 in the present example) specified by the identifying number is cancelled. With this cancellation, in the cancellation notifying range 44, it is possible to set so as to selectively cancel only the communication restriction conducted in the restriction notifying range 43. Namely, even when the user who has already set the manner mode outside the concert hall passes through the cancellation notifying range 44 as indicated by the arrow U4, the manner mode is not cancelled.

Thus, according to the present example, in the same way as described above, the mobile phone 2 automatically controls the communication status in the communication-restriction-required place such as the concert hall and the hospital, and hence it does not happen that the user forgets to set the manner mode when entering the concert hall and forgets to cancel the manner mode when exiting the hall. Moreover, a system (which will hereinafter be termed a gate type) in which the RF tag 1 is attached to only the vicinity of the doorway of the area where the communication should be controlled as in the present example, requires a less number of the RF tags 1 to be attached than a system (which will hereinafter be referred to as a zone type) in which the RF tags 1 are disposed to cover the should-control-the-communication area throughout, thereby enabling the system configuration to be simplified.

Further, the gate type and the zone type may be combined, wherein the control may also be conducted selectively corresponding to the readout control information. For instance, in the processes in FIG. 7, the RF tag reader searches for the RF tag 1 (S22), then, when receiving the data from the RF tag 1 as a result of this search (S23), it is determined whether the control content specifies the gate type or the zone type, and, if determined to be the gate type, following steps S24 - S28 are executed as described above. Whereas if determined to be the zone type, it is determined by comparing the control content read this time with the present control content whether the control is needed or not (S25). Herein, if the present control content does not specify the restriction of the communication while the readout control content specifies the restriction of the communication, it is determined that the control is required, and the operation proceeds to step 26, wherein the communication control unit 45 performs the operation of restricting the communication (S26). Further, if the present control content specifies the restriction of the communication and the readout control content specifies the restriction of the communication, it is determined that the control is not required, and the operation loops back to the start (S28). Then, if disabled to receive the data from the RF tag 1 in step 23 and if the data of the readout RF tag represents a content other than the communication control, the operation proceeds to step 27, wherein the communication control unit 45 performs the operation of cancelling the restriction of the communication (S27).

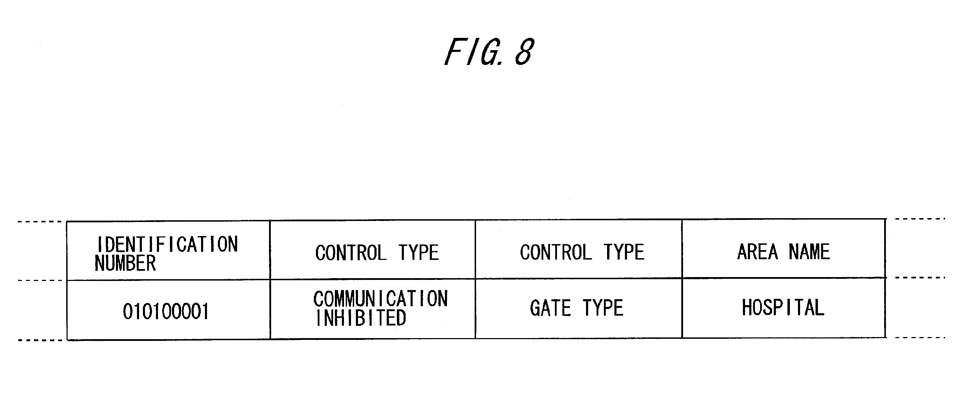

Thus, in the case of determining whether the control content is of the gate type or the zone type, for example, as shown in FIG. 8, it is desirable that the data specifying the type be stored as the control content. Note that only an area name and a control code may, without being limited to this scheme, be stored, and the determining unit 44 may select the control content corresponding to the area name and the control code. For example, the determining unit 44 stores the area name or the control code and the control content in a way that associates these items with each other, wherein the determining unit 44 selects the corresponding control content such as the inhibition of the communication of the gate type if the area name represents a hospital, the inhibition of the incoming tone of the zone type if the area name represents an intra-train area other than the priority seat, the inhibition of the communication of the zone type if the control code is "001", and the cancellation of the inhibition of the communication if the control code is "002".

As described above, according to the present embodiment, the mobile phone recognizes without via the telephone line that the mobile phone exists in the control area and moves off the control area, and it is feasible to set and cancel the restriction of the communication as designated by the control information of the RF tag.

With this scheme, it is possible to restrict the communication in the extremely narrow area such as the priority seat and to prevent the user from forgetting to set the manner mode in the concert hall etc.
Further, the transmission and the reception of the call are not regulated via the telephone line, and hence the load on the network is still small even when a multiplicity of users simultaneously performs the telephonic communications in a short period of time in the concert hall, a full-packed train, etc. Moreover, the call in emergency can be originated depending on judgment of the user, resulting in no inconvenience.

### <Others>

The present invention is not limited to only the illustrated examples given above and can be, as a matter of course, changed in a variety of forms in the range that does not deviate from the gist of the present invention.
For example, even the configurations given in the following Notes can acquire the same effects as those in the embodiment discussed above. Further, the components thereof can be combined to the greatest possible degree.

## Claims

1. A mobile communication device comprising:
a communication unit performing communications with another device via a communication line;
a reading unit reading control information of a control area in which the communication is controlled;
a determining unit determining a control content of the control information; and
a control unit controlling a communication status of the communication unit according to the control content.

2. Amobile communication device according to Claim 1, wherein the control information contains information that specifies the control and information that specifies the control area.

3. A mobile communication device according to Claim 1, wherein the determining unit determines that the control content of the control information remains valid during a period for which the reading unit continuously receives the control information of the control area, and determines that the control content of the control information is invalid when the reading unit does not receive the control information.

4. Amobile communication device according to Claim 1, wherein the control content embraces inhibition of the communication performed by the communication unit, cancellation of the inhibition of the communication, inhibition of an incoming tone of the communication unit, and cancellation of the inhibition of the incoming tone.

5. A mobile communication device according to Claim 1, wherein the determining unit, when the reading unit reads the control information, compares the control content related to the control information with a control content of the control executed by the control unit, and thereby determines whether the control is required to change or not, and
the control unit, when determining that the control is required to change, changes the control based on the control content related to the readout control information.

6. A mobile communication device according to Claim 1, wherein when conducting the control based on the control content of a readout control signal, a user is given notification by displaying a purport of conducting the control, vibrations of a vibrator or outputting a tone.

7. A mobile communication device according to Claim 1, wherein if a user inputs an instruction of the communication during a period for which the control unit restricts the communication of the communication unit and if the user again inputs the instruction of the communication after notifying the user of a purport of restricting the communication, the communication unit is made to perform the communication.

8. A mobile communication device according to any one of Claim 1, wherein when the reading unit reads plural pieces of control information, the determining unit determines priority levels of these plural pieces of control information, and the control unit conducts the control according to the control information exhibiting the higher priority level.

9. A mobile communication device according to Claim 1, wherein if the control content specifies the inhibition of the communication, the control unit stops the communication of the communication unit in a status where the reading unit is enabled to read the control information.

10. A mobile communication device according to Claim 1, wherein the reading unit is an RF reader that reads the control information recorded on an RF tag.

11. A control system of a mobile communication device, including a reading target object attached in a control area where the communication is controlled, and the mobile communication device conducting, when moving to the control area, the control corresponding to the control area,
the reading target object being stored with control information corresponding to each control area,
the mobile communication device comprising:
a communication unit performing communications with another device via a communication line;
a reading unit reading control information of a control area in which the communication is controlled;
a determining unit determining a control content of the control information; and
a control unit controlling a communication status of the communication unit according to the control content.

12. A control method by which a mobile communication device executes:
a step of performing communications with another device via a communication line;
a step of reading control information of a control area in which the communication is controlled;
a step of determining a control content of the control information; and
a step of controlling a communication status according to the control content.

13. A control method according to Claim 12, wherein the control information contains information that specifies the control and information that specifies the control area.

14. A control method A mobile communication device according to Claim 12, wherein the step of determining the control content includes determining that the control content of the control information remains valid during a period for which the control information of the control area is continuously received, and determining that the control content of the control information is invalid when the control information is not received.

15. A control method according to Claim 12, wherein the control content embraces inhibition of the communication performed by the communication unit, cancellation of the inhibition of the communication, inhibition of an incoming tone of the communication unit, and cancellation of the inhibition of the incoming tone.

16. A control method according to Claim 12, wherein the step of determining the control content includes comparing, when reading the control information, the control content related to the control information with a control content of the control executed by the control unit, and thereby determining whether the control is required to change or not, and
the step of controlling the communication status includes changing, when determining that the control is required to change, the control based on the control content related to the readout control information.

17. A control method according to Claim 12, wherein when conducting the control based on the control content of a readout control signal, a user is given notification by displaying a purport of conducting the control, vibrations of a vibrator or a tone from a speaker.

18. A control method according to Claim 12, wherein the step of controlling the communication status includes, if a user inputs an instruction of the communication during a period for which to restrict the communication of the communication unit, notifying the user of a purport of restricting the communication, and thereafter, if the user again inputs the instruction of the communication, performing the communication.

19. A control method according to Claim 12, wherein when reading plural pieces of control information, the step of the control content includes determining priority levels of these plural pieces of control information, and conducting the control according to the control information exhibiting the higher priority level.

20. A control method according to Claim 12, wherein if the control content specifies the inhibition of the communication, the communication is stopped in a status where the control information can be read.

21. A control program for making amobile communication device execute:
a step of performing communications with another device via a communication line;
a step of reading control information of a control area in which the communication is controlled;
a step of determining a control content of the control information; and
a step of controlling a communication status according to the control content.
